# EUROPEAN PATENT APPLICATION

(11) **EP 4 140 442 A1**
(43) Date of publication of application: **01.03.2023**
(21) Application number: 22191382.5
(22) Date of filing: 22.08.2022
(51) Int. Cl.: A61C 17/20, A61C 17/22, A61C 17/34

(54) **ELECTRIC TOOTHBRUSH**

(30) Priority: 31.08.2021 GB 202112400
(71) Applicant: Hayco Manfacturing Ltd., Hong Kong (HK)
(72) Inventor: Jupp, Simeon, Hong Kong (HK); Wong, Chun Yu, Hong Kong (HK)
(74) Representative: adares Patent- und Rechtsanwälte Reininger & Partner GmbB

(57) **Abstract**

The present invention relate to an electric toothbrush with an elongate body comprising a housing, a brush head and a neck member arranged between the housing and the brush head, wherein i) the housing accommodates a motor for generating an oscillation movement to a shaft extended from the motor, i) the neck member couples with the shaft such that the oscillation movement is transmittable to the neck member whereby the neck member and the shaft are oscillatable together in the same extent, iii) a proximal end of the brush head is provided with a circumferential region rotatably fitted to a distal end of the neck member, and iv) the electric toothbrush further comprises an elongate strip member extending from the neck region to the brush head with opposite ends of the strip member fixedly connected to the brush head and the neck member, respectively.

## Description

### CROSS REFERENCE TO RELATED APPLICATION

The present application claims priority from earlier filed UK Patent Application No. 2112400.3 filed August 31, 2021, contents of which are incorporated herein in its entirety.

### FIELD OF THE INVENTION

The present invention is concerned with an electric toothbrush and an arrangement for amplifying oscillation movement to the brush head thereof and/or for providing a cushioning effect from the brush head on the teeth and gum of a user.

### BACKGROUND OF THE INVENTION

Toothbrushes have been around for a longer time. As consumer expectations on toothbrushes increase, toothbrush designs have evolved. Specifically, there has been a demand for toothbrushes which are more effective on tooth cleaning.

Reports have indicated that electric toothbrushes were first invented back in the 1950s'. Further reports have indicated that portable electric toothbrushes were invented in 1960s'. However, it wasn't until the 1970s' and 1980s' when electric toothbrushes became more commonly used. In the past three decades, many electric toothbrushes have focused on cleaning efficiencies. On one hand, since some users have still complained about cleaning efficiencies, toothbrush designers have tried to produce more powerful electric toothbrushes. As such, many toothbrushes are made with a more powerful motor. On the other hand, reports from dentists indicate that some electric toothbrushes may be too powerful and/or some users have exerted excessive force when brushing their teeth, thus causing tooth abrasion.

The present invention seeks to provide an improved electric tooth brush which can improve brushing efficiencies and/or effectiveness, and yet the electric tooth brush is gentle to the teeth and would reduce the chance of tooth abrasion and improve user experience. The present invention provides at least an alternative to the public.

### SUMMARY OF THE INVENTION

According to a first aspect of the present invention, there is provided an electric toothbrush with an elongate body comprising a housing, a brush head and a neck member arranged between the housing and the brush head, wherein:
- the housing accommodates a motor for generating an oscillation movement to a shaft extended from the motor,
- the neck member couples with the shaft such that the oscillation movement is transmittable to the neck member whereby the neck member and the shaft are oscillatable together in the same extent,
- a proximal end of the brush head is provided with a circumferential region rotatably fitted to a distal end of the neck member, and
- the electric toothbrush further comprises an elongate strip member extending from the neck region to the brush head with opposite ends of the strip member fixedly connected to the brush head and the neck member, respectively, such that the brush head is drivenable by the strip member to oscillate as well and to a larger extent compared to the neck member.

With the improved electric tooth brush, the brushing efficiency is improved. At the same time, the toothbrush is gentle on the teeth and the gum thus reducing discomfort or the risks of tooth abrasion to the user.

Preferably, the motor may be an ultrasonic motor and the toothbrush may comprise a battery for powering the motor.

Advantageously, the shaft and the neck member may be removably coupled together.

Suitably, the brush head may sit loosely on the neck member but the neck member does not directly drive movement of the brush head.

In an embodiment, the strip member may have the same thickness along its length.

In one embodiment, the strip member may have a wider distal end positioned within the brush head and a narrow proximal end posited in the neck member.

In a specific embodiment, the strip member may not extend to or engage with the shaft.

In a preferred embodiment, there may be provided a clearance between a proximal end of the strip member and the shaft.

In a particular embodiment, the strip member may be made of a material selected from the group consisting of polyoxymethylene (POM), polypropylene (PP) and stainless steel.

The brush head and the neck member may be in the form of discrete components but configured (sized and shaped) with the circumferential region fitted around or within the distal end of the neck member to allow the brush head to rotate around the neck member. The brush head and the neck member are essentially such that the brush head floats on the neck but drivenable by the neck member.

According to a second aspect of the present invention, there is provided an electric toothbrush with an elongate body comprising a housing, a brush head and a neck portion arranged between the housing and the brush head, wherein:
- the housing accommodates a motor provided with a shaft for generating an oscillation movement,
- a proximal end of the brush head is provided with a circumferential region rotatably fitted to a distal end of the neck member,
- the electric toothbrush further comprises an elongate springy member extending from the neck region to the brush head for transferring and amplifying the oscillation movement from the shaft to the brush head via the springy member, and
- the springy member also acts as a dampener such that when the brush head is in contact with a surface the oscillation movement of the brush head is adjustable in response to the contact.

Preferably, the springy member may be in the form of a strip material fixedly connected to the brush head and the neck member, respectively, and acts as a torsional spring, such that the brush head is drivenable by the springy member to oscillate to a larger extent compared to the neck member.

Suitably, the motor may be an ultrasonic motor, and the electric toothbrush may comprise a battery for powering the motor.

Advantageously, the shaft and the neck member may be removably coupled together.

In an embodiment, the brush head may sit loosely on the neck member but the neck member does not directly drive movement of the brush head.

In one embodiment, the springy member may have the same thickness along its length, have a wider distal end positioned within the brush head and a narrow proximal end posited in the neck member, and the springy member may not extend to or engage with the shaft.

In a preferred embodiment, there is provided a clearance between a proximal end of the stringy member and the shaft.

In a specific embodiment, the strip member may be made of a material selected from the group of polyoxymethylene (POM), polypropylene (PP) and stainless steel.

The brush head and the neck member may be in the form of discrete components but configured with the circumferential region fitted around or within the distal end of the neck member to allow the brush head to rotate around the neck member.

### BRIEF DESCRIPTION OF THE DRAWINGS

Some embodiments of the present invention will now be explained, with reference to the accompanied drawings, in which:
Fig. 1 is a schematic diagram showing an exploded view of a conventional electric toothbrush;
Fig. 2 is a schematic diagram showing an exploded view of an embodiment of an electric toothbrush according to the present invention;
Fig. 3A is a schematic view of the electric toothbrush of Fig. 2 in an assembled configuration;
Fig. 3B is a schematic view illustrating the operation of a component in the electric toothbrush of Fig. 3A;
Fig. 4A is a diagram illustrating the general operation of an electric toothbrush;
Fig. 4B is a schematic diagram showing the movement of the brush head of the electric toothbrush of Fig. 1 according to the operation illustration in Fig. 4A;
Fig. 4C is a schematic diagram showing the movement of the brush head of the electric toothbrush of Fig. 2;
Fig. 5A illustrates the extent of the oscillation movement of the brush head of the electric toothbrush of Fig. 1 in a first (lower) power setting; and
Fig. 5B illustrates the extent of the oscillation movement of the brush head of the electric toothbrush of Fig. 2 in a first (lower) power setting.

### DETAILED DESCRIPTION OF PREFERRED EMBODIMENTS OF THE PRESENT INVENTION

The present invention is concerned with an improved electric toothbrush, and an arrangement for use in the electric toothbrush for amplifying oscillation movement of the brush head and for providing cushioning effect to the teeth and gum of a user during use.

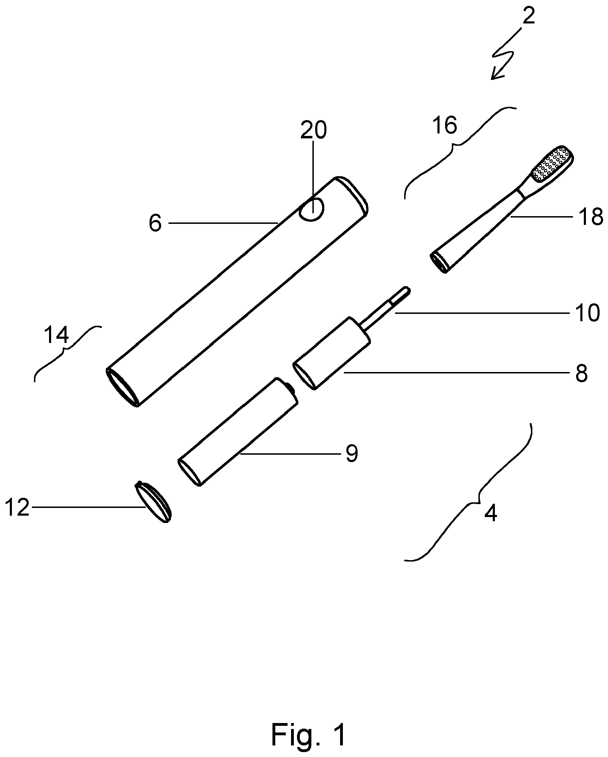

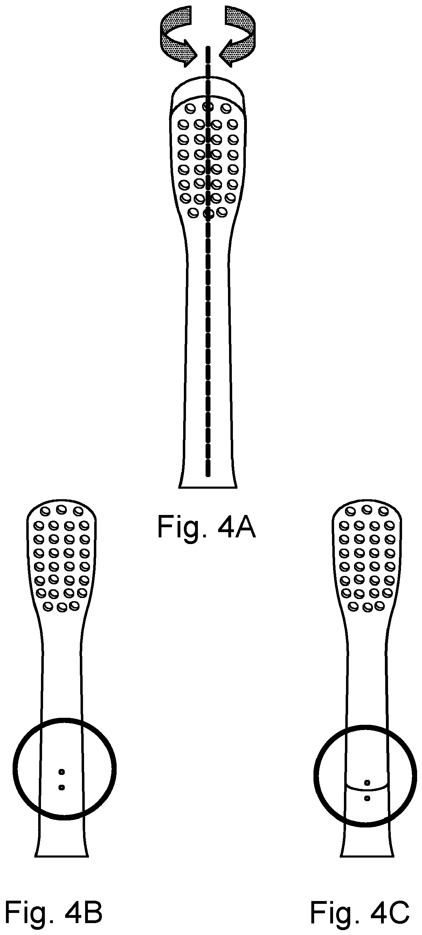

Fig. 1 is a schematic diagram showing an exploded view of a conventional electric toothbrush 2. The toothbrush 2 comprises a lower (proximal) portion 4 including a housing 6 for accommodating a motor 8 for generating an oscillation movement to a shaft 10 extending therefrom. The housing 6 provides a chamber for holding a battery 9 for powering the motor 8. A closure 12 in the form of a lid is provided at a proximal end 14 of the housing 6 for securing the battery 8 in the housing 6. The toothbrush 2 comprises an upper portion (distal) 16 which is essentially a brush head 18 secured to the shaft 10 from the lower portion 4. A switch 20 is provided on the housing 6 for turning the toothbrush 2 on or off. In an assembled configuration, the brush head 18 is fitted to the shaft 10 such that the shaft 10 directly engages the brush head 18 and thus drives the brush head 18 and transmit the oscillation movement from the shaft 10 to the brush head 18. Specifically, the shaft 10, in use, fixedly engages directly with the brush head 18. As such, the brush head 18 oscillate with the shaft 10 to the same extent. It is to be noted that in the context of this specification oscillation refers to reciprocating rotation about an axis to a limited extent. Please also see Fig. 4A for example.

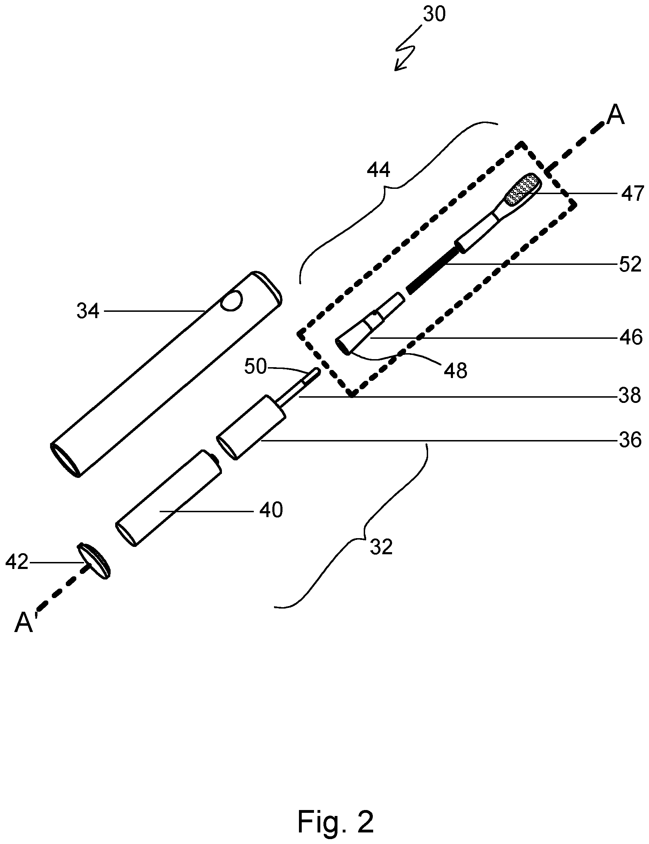

Fig. 2 is a schematic diagram showing an exploded view of an embodiment of an electric toothbrush 30 according to the present invention. The electric toothbrush 30 has an elongate profile and comprises different sections including a lower (proximal) portion 32 having a housing 34 for accommodating a motor 36 from which a shaft 38 extends, a battery 40 situated behind the motor 36 for powering the motor 36, and a lid 42 securing the lid 44 in place in the housing 34. The shaft 38 is made of stainless steel and thus the shaft 38 is stiff and not flexible. The shaft 38 defines a longitudinal axis A-A' about which it oscillates. A mechanical modulator is provided in the motor 36 such that rotational movement from the motor 36 is varied to reciprocating rotational (or oscillational) movement of limited extent. In other words, there is a range within which the shaft 38 oscillates.

The electric toothbrush comprises an upper (distal) portion 44 having a neck member 46 and a brush head 47. The neck member 47 is made of a stiff polymeric material and provided with a circumferential proximal end 48 having a recess for receiving the shaft. The circumferential proximal end 48 of the neck member 46 resembles a circumferential flange and is sized and shaped to fit around the shaft 38 and to sit on top of the lower portion of the electric toothbrush. An upper end of the generally cylindrical shaft is provided with a cut-out region 50 and the recess in the proximal end of the neck member 46 has a complementary profile. Once the circumferential proximal end of the neck member 46 is fitted to the shaft 38 and sits on the upper end of the lower portion, the neck member 46 and the shaft 38 (and also the lower portion) are secured together. The neck member 46 also has a circumferential distal end having a recess although it has a reduced diameter (or width) compared to its proximal end thereof.

The brush head 47 defines a proximal end and a distal end. The proximal end of the brush head 47 is provided with a recess for receiving the distal end of the neck member 46. In this embodiment, the proximal end of the brush head 47 resembles a circumferential flange and has a wider diameter when compared with the distal end of the neck member 46. The distal end of the neck member 46 and the proximal end of the brush head 47 are configured such that, with respect to the brush head and the neck member only, while they are complementary to each other and are coupled together when the latter sits at or/and around latter the former, the brush head 47 is freely rotatable around the neck member 46. The neck member 46 itself does not drive the brush head 47 or the brush head 47 is not drivenable by the neck member 46.

The electric toothbrush further comprises a strip member 52. The strip member 52 has an elongate profile with a flexible and springy mechanical characteristic. In other words, it acts as a torsional spring. In this embodiment, the strip member 52 has a dimension of substantially 25.5mm in longitudinal length, a width of 4mm and a thickness of 1 mm. Further, the material used in this material is polyoxymethylene (POM). In other words, the strip member 52 generally has a rectangular profile in this embodiment. While POM is chosen due to its suitable torsional spring characteristics in this embodiment, studies have shown that other suitable materials (e.g. polypropylene or stainless steel) which can contribute to the workable torsional spring characteristics can also be used.

In this embodiment, the strip member 52 made of POM has a torsion or torsional force from 40-270 gf.cm (gram-force). At the relative angle of rotation is 5° the torsion is 40 gf.cm, while at the relative angle of rotation of 30°, the torsion is 270 gf.cm. The strip member 52 can be made of polypropylene (PP) which for the purpose of this invention can also produce the workable torsion. Studies have shown that as long as the torsion of the strip member 52 is 30-270 gf.cm, the desired characteristics discussed above can be achieved. Stainless steel is another material which when used to produce the strip member 52 can provide a workable torsion within this range. Table 1 below summarizes the examples of materials and torsion characteristics thereof.

**Table 1: Material and torsion of strip member**

| Angle | POM | PP |
|---|---|---|
| 5° | 40gf.cm | 30 gf.cm |
| 10 | 90 gf.cm | 50 gf.cm |
| 15° | 140 gf.cm | 70 gf.cm |
| 20° | 190 gf.cm | 80 gf.cm |
| 25° | 220 gf.cm | 90gf.cm |
| 30° | 270 gf.cm | 100 gf.cm |

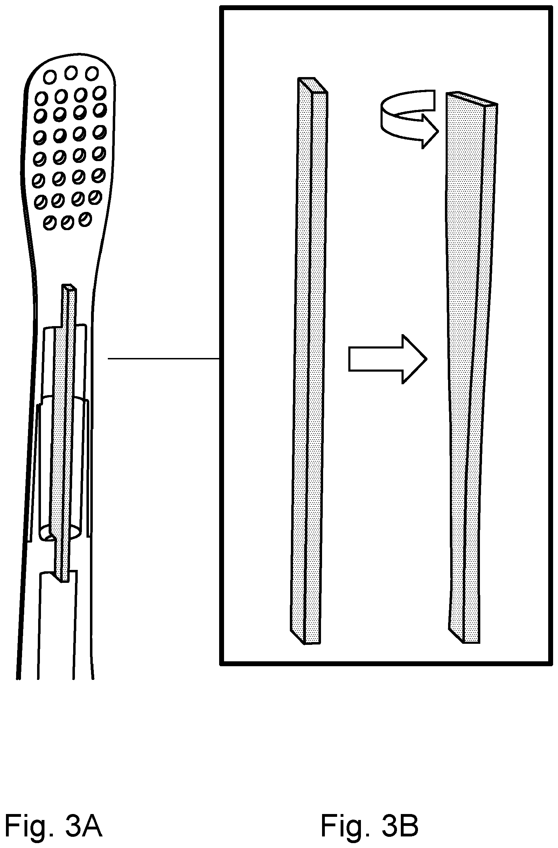

Further, in other embodiments, the strip member 52 may have a profile with an enlarged width at the distal end. The strip member defines opposite ends, namely a proximal end and a distal end. The proximal end and the distal end of the strip member are received in and fixedly connected to the neck member and the brush head, respectively. The strip member plays three main roles. First, the strip member 52 fixedly connects the brush head 47 and the neck member 46 together such that the brush head 47 does not dislocate from its coupling position with the neck member 48. Second, since the strip member 52 is fixedly connected to the neck member 48, such that rotational movement of the neck member is transferred to rotational movement of the strip member 52. Likewise, since the strip member 52 is fixedly connected to the brush head 47, rotational movement of the strip member 52 is transferred to rotational movement of the brush head 47. The brush head 47 is however user detachable for replacement. Third, the strip member 52 acts as a mechanical amplifier. When the electric toothbrush is powered on, the shaft is caused to reciprocatingly rotate about the shaft axis. Due the presence of the modulator, the reciprocating rotation is performed within a limited range. Since the neck member and the shaft are fixedly connected together and they are both stiff mechanically, reciprocating rotational movement of the shaft of the motor 36 is transmitted to the neck member 46 to the same extent. Please see for example Fig. 3A and Fig. 3B which illustrate the rotational oscillation of the strip member 52 in use.

As explained above, when the toothbrush 30 is powered on, rotational oscillation movement is transmitted from the shaft 50 to the neck member 48. Since the brush head 47 and the neck member 46 are connected together via the strip member 52, the neck member 48 does not directly drive or transfer rotational oscillation movement to the brush head 47. Instead, the neck member 48 directly drives and transfer rotational oscillation movement to the strip member 52. It is to be noted that the brush head 47 with a certain weight is fixedly secured to the distal end of the strip member 52 which possess the flexible and springy mechanical characteristics. When the neck member 48 directly drives and transfer rotational oscillation movement to the strip member 52, a differential on rotational oscillation behaviour occurs along the strip member 52 and to the brush head 47. When this occurs, in use, the strip member 52 actually slightly twisted and coiled up. Since the proximal end of the strip member 52 engages with the neck member 46, its rotational oscillation frequency and extent (or range) are essentially the same as that of the neck member 46. However, in use, the oscillation profile of the distal end of the strip member 52 is not same. Specifically, due to the flexible and springy mechanical characteristic of the strip member 52, the distal end of the strip member 52 is caused to rotationally oscillate at the same frequency as that of the neck member (and the shaft) but with a larger oscillation range. The increased in rotational oscillation range is due to the flexible nature of the elongate strip member 52 so that the strip member 52 is caused to travel with an increased in oscillation range, especially at its distal end. The larger oscillation range is also caused by the uncoiling of the strip member in each cycle. It can be envisaged that the distal end of the strip member 52 is caused to over-shoot or over-rotate/-oscillate at each vectorial rotational movement before the next vectorial movement. Since the brush head 47 is fixedly connected to and drivenable by the strip member 52, the brush head 47 is also caused to oscillate at an increased rotational oscillation range. It can also be envisaged that the brush head 47 floats on the neck member 46 but drivenable by the strip member 52, allowing the brush head 47 to also assume the over-shooting or over-rotation/- oscillation behaviour.

In order to demonstrate the difference between the electric tooth brush of the present invention and conventional electric toothbrushes, a side-by-side comparison is shown in Figs. 4A to 4C. Fig. 4A illustrates the general profile of an electric toothbrush in which a rotation axis is shown. Fig. 4B illustrates a conventional electric toothbrush. It is shown that an upper portion of the toothbrush is made of one continuous member in that there is no distinction or separate brush head and neck member. As such, the entire upper portion is drivenable to oscillate by a shaft from a motor of the electric toothbrush with the same frequency. Specifically, since there is no differential in oscillation extent, in use, the two dots marked on the upper portion oscillate with the same oscillation extent. Fig. 4C illustrates the embodiment of the electric toothbrush according to the present invention as depicted above. It is shown that an upper portion of the toothbrush is made of two distinct members, namely the brush head and the neck member. Only the neck member of the upper portion is drivenable to oscillate by the shaft from the motor of the electric toothbrush with the same frequency. Due to the lack of fixed connection of the brush head and the neck member, the brush head is not directly drivenable by the neck member. Instead, it is drivenable by the elongate strip member situated in the upper portion. Specifically, there is a substantial differential in oscillation extent, In Fig. 4C, two dots are marked on the upper portion, with a first (upper) dot on the proximal end of the brush head while a second (lower) dot on the distal end of the neck member. In use, the two dots marked on the upper portion oscillate with different same oscillation extent, in that the upper dot oscillates with a wider range than lower dot, indicating that the brush head travels with greater a oscillation range.

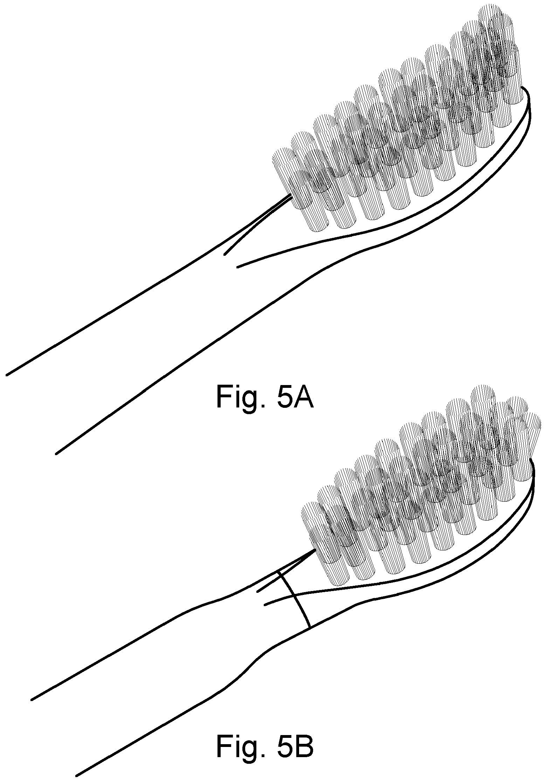

Fig. 5A and Fig. 5B are images which illustrate a conventional electric toothbrush and the toothbrush of the present invention in use. Due to the difference in construction of the upper portion of the electric toothbrush and the presence of the strip member for connecting the brush head and the neck member, the brush head of the electric toothbrush oscillates at great extent.

Studies leading to present invention have shown that, due to the use of the strip member, the oscillation extent of the brush head of the electric toothbrush according to the present invention is increased by at least 13% to 50%.

In addition to the differences in construction and oscillation behaviour, the use of the strip member also provides a cushioning effect. In the event that a user is pressing on the teeth or gum with the brush head with excessive force, due to the springy member in the upper portion, the brush head can actually adjust in position, reducing the pressure on the teeth or gum. Thus, it can be seen that the strip member serves not only to amplify oscillation extent (and to increase cleaning efficacy), it can also modulate and reduce excessive pressure to the user.

It is to be noted that according to an embodiment of the present invention the brush head 47 is designed to perform a reciprocating vibrational twist motion in an axial direction thus a rotational oscillation motion, rather than a stroke motion in an axial direction (front/back or forward/backward motion). The rotational oscillation motion is amplified by the strip member 52 and transferred to the brush head 47. The amplification occurs radially at the strip member 52 which has the profile of a flexible and vertically aligned blade. The amplification does not occur perpendicularly to the axis of the shaft. At least in the embodiment as illustrated above, only the brush head is user detachable.

It should be understood that certain features of the invention, which are, for clarity, described in the content of separate embodiments, may be provided in combination in a single embodiment. Conversely, various features of the invention which are, for brevity, described in the content of a single embodiment, may be provided separately or in any appropriate sub-combinations. It is to be noted that certain features of the embodiments are illustrated by way of nonlimiting examples. For example, while the strip member is made of polyoxymethylene (POM), studies leading to the present invention indicates that other suitable materials include polypropylene (PP) and stainless steel. Further, the dimensions of the strip member may have a length, width and thickness of 3-30mm, 1-2mm and 0.1-20mm, respectively, or it may assume the configuration of a rod. Also, a skilled person in the art will be aware of the prior art which is not explained in the above for brevity purpose.

## Claims

1. An electric toothbrush with an elongate body comprising a housing, a brush head and a neck member arranged between the housing and the brush head, wherein:
- the housing accommodates a motor for generating an oscillation movement to a shaft extended from the motor,
- the neck member couples with the shaft such that the oscillation movement is transmittable to the neck member whereby the neck member and the shaft are oscillatable together in the same extent,
- a proximal end of the brush head is provided with a circumferential region rotatably fitted to a distal end of the neck member, and
- the electric toothbrush further comprises an elongate strip member extending from the neck region to the brush head with opposite ends of the strip member fixedly connected to the brush head and the neck member, respectively, such that the brush head is drivenable by the strip member to rotationally oscillate as well and to a larger extent compared to the neck member.

2. An electric toothbrush as claimed in Claim 1, wherein the motor is an ultrasonic motor.

3. An electric toothbrush as claimed in Claim 1, comprising a battery for powering the motor.

4. An electric toothbrush as claimed in Claim 1, wherein the shaft and the neck member are removably coupled together.

5. An electric toothbrush as claimed in Claim 1, wherein the brush head sits loosely on the neck member but the neck member does not directly drive movement of the brush head.

6. An electric toothbrush as claimed in Clam 1, wherein the strip member has the same thickness along its length.

7. An electric toothbrush as claimed in Claim 1, wherein the strip member has a wider distal end positioned within the brush head and a narrow proximal end posited in the neck member.

8. An electric toothbrush as claimed in Claim 1, wherein the strip member does not extend to or engage with the shaft.

9. An electric toothbrush as claimed in Claim 1, wherein a clearance is provided between a proximal end of the strip member and the shaft.

10. An electric toothbrush as claimed in Claim 1, wherein the strip member is made of a polymeric material selected from the group consisting of polyoxymethylene (POM), polypropylene (PP) and stainless steel.

11. An electric toothbrush as claimed in Claim 1, wherein the brush head and the neck member are in the form of discrete components but configured with the circumferential region fitted around or within the distal end of the neck member to allow the brush head to rotate around the neck member.

12. An electric toothbrush as claimed in Claim 1, wherein the neck member and the brush head are rotationally oscillatable and the elongate strip member is and acts as a dampener such that when the brush head is in contact with a surface rotational oscillation movement of the brush head is adjustable in response to the contact.

13. An electric toothbrush as claimed in Claim 12, wherein the springy member acts as a torsional spring.
